# EUROPEAN PATENT APPLICATION

(11) **EP 4 593 250 A1**
(43) Date of publication of application: **30.07.2025**
(21) Application number: 24153851.1
(22) Date of filing: 25.01.2024
(51) Int. Cl.: H02J 50/12, A63H 33/04, A63H 33/10, H02J 50/80, H04B 5/26, H04B 5/79

(54) **ELECTRONIC DEVICE WITH MULTIFUNCTION MAGNETIC SYSTEM**

(71) Applicant: LEGO A/S, 7190 Billund (DK)
(72) Inventor: DAVIES, Louis Nigel, Cambridge (GB); KNIGHTS, Christopher Robert, Cambridge (GB); NORRIS, Mark Henry, Cambridge (GB); LAPRADE, Ludovic Daniel, Cambridge (GB); KNIGHTS, Andrew James, Cambridge (GB)
(74) Representative: Guardian IP Consulting I/S

(57) **Abstract**

Disclosed herein is an electronic device comprising an energy storage device, a coil circuit comprising an electromagnetic coil, the coil circuit comprising an adjustment circuit for adjusting a resonance frequency of the electromagnetic coil, the adjustment circuit being configured to allow the electromagnetic coil to have a resonance frequency within one of at least two frequency ranges, the electronic device being configured to receive a wireless charging signal having a frequency within a first frequency range of the at least two frequency ranges, and use the received wireless charging signal to charge the energy storage device, wherein the coil circuit is configured such that the default resonance frequency of the electromagnetic coil is within the first frequency range.

## Description

The present disclosure relates in one aspect to an electronic device that is configured to perform multiple functions with an electromagnetic coil comprised in the electronic device.

### BACKGROUND

Power transmission via magnetic induction is by now well-known, and is utilised widely to charge power receiver devices having one or more receiver coils. When charging of a power receiver device is desired, the device is placed such that at least one of its receiver coils can couple to one or more transmitter coils in a wireless power transmitter device. Such an arrangement allows for wireless power transfer between the power transmitter device and the power receiver device without requiring any wires or physical electrical connections between the transmitter and receiver devices to be made.

Wireless power transfer arrangements may also be used in toys and toy systems, such as toy construction systems, the latter comprising elements which are designed to be modular and which may be configured to be used in the construction of one or more toy construction models; For example, the same toy construction element may in one instance be used as part of the hull of an aircraft toy model and in another instance as part of a leaf of a flower toy model. Advanced toy construction elements comprising a wireless power receiver such that the advanced elements can recharge without needing to be physically coupled to a charging source are known. For example, WO2020156721 discloses a toy system comprising a contactless charging system.

Electronic devices, such as those used in toy systems, may generally be improved by expanding the user experience, such as expanding a play experience. Hence, it is desirable to provide electronic devices which provide wireless charging while enhancing a user experience.

Generally, improved usage of an electronic device would be advantageous, such as an approach allowing increased flexibility, reduced cost, reduced complexity, and/or improved performance would be advantageous.

It is further desirable to provide an electronic device and a system of electronic devices that can be manufactured at low cost.

It is further desirable to provide an electronic device that has a small form factor, e.g. small enough to be easily grasped and held by a small child's hand.

It is further desirable to provide a system of electronic devices that is scalable and can cope with a varying number of electronic devices.

Additionally, the functions of an electronic device suitable for use in toy systems may advantageously be user-friendly, even for smaller children, and either require no user involvement at all, or if any, only a user involvement that can be accomplished by smaller children, for example taking into consideration their available cognitive skills and hand control.

On this background, despite previous efforts, it remains desirable to provide an electronic device and a system of such devices that solve one or more of the above problems and/or other problems, and/or that have other benefits, or that at least provide an alternative to existing solutions.

Various aspects of embodiments of an electronic device disclosed herein address one or more of the above needs and/or other needs that exist in the field of wireless power transfer systems.

### SUMMARY

According to an aspect, the present disclosure relates to an electronic device that comprises:
- an energy storage device, such as a rechargeable battery or a capacitor of relevant size, e.g. a large capacitor;
- a coil circuit comprising an electromagnetic coil, the coil circuit comprising an adjustment circuit for adjusting a resonance frequency of the electromagnetic coil, the adjustment circuit being configured to allow the electromagnetic coil to have a resonance frequency within one of at least two frequency ranges,

the electronic device being configured to:
   - receive a wireless charging signal having a frequency within a first frequency range of the at least two frequency ranges, and
   - use the received wireless charging signal to charge the energy storage device,
wherein the coil circuit is configured such that the default resonance frequency of the electromagnetic coil is within the first frequency range.

Thus, the electronic device is configured to provide for at least two different resonance frequencies of its electromagnetic coil, the default setting of its coil circuit is a resonance frequency within a first frequency range, and the electronic device is configured to wirelessly charge from a charging signal having a frequency within the first frequency range. Thus, the default setting, which is also the setting of the coil circuit when the electronic device is out of energy or almost out of energy, e.g. when a rechargeable battery is low on power or "dead", is one in which the electronic device is able to wirelessly charge. Each of the possible resonance frequencies of the electromagnetic coil may be utilised by the electronic device for a different function and the coil circuit is configured such that the default resonance frequency of the electromagnetic coil is one that the electromagnetic device is configured to use for wireless charging. Utilising the electromagnetic coil for multiple functions provides the electronic device with a greater functionality. However, at times where the energy storage device of the electronic device is at low power or substantially drained, it is advantageous that the coil circuit defaults to a charging mode. This may, for example, be achieved by configuring the coil circuit such that changing the resonance frequency of the electromagnetic coil away from the charging resonance frequency range requires power from the energy storage device. For example, by using one or more high-voltage switches which are closed in order to change the resonance frequency away from a frequency within the charging resonance frequency range, i.e. away from the first frequency range, while open switches mean that the resonance frequency of the electromagnetic coil is within the first frequency range. Thus, at least part of the adjustment circuit may be implemented in hardware and the adjustment circuit may be a switch circuit.

In some embodiments, the electronic device is further configured to determine a pose of the electronic device based on a signal received by the electromagnetic coil at a time where the coil has a resonance frequency within a resonance frequency range of the at least two resonance frequency ranges different from the first frequency range, and/or receive a signal from a tag and/or transmit a signal intended for a tag at a time where the coil has a resonance frequency within a resonance frequency range of the at least two resonance frequency ranges different from the first frequency range. Thus, In some embodiments, a resonance frequency range of the at least two resonance frequency ranges is used for magnetic pose determination relative to one or more other electronic devices, and/or a resonance frequency range of the at least two resonance frequency ranges is used for receiving a tag signal from a tag and/or transmitting a tag signal intended for a tag. For example, a resonance frequency within a second frequency range may be used for magnetic pose determination and/or for tag communication. In some embodiments, the electronic device is configured to utilise the electromagnetic coil to perform a first function different from charging during a time when the resonance frequency of the electromagnetic coil is within a second frequency range. In some embodiments, the electronic device is configured to utilise the electromagnetic coil to perform a second function different from charging during a time when the resonance frequency of the electromagnetic coil is within a third frequency range. Thus, the electronic device may be configured to utilise the electromagnetic coil to: perform a first function different from charging, e.g. magnetic pose determination, during a time when the resonance frequency of the electromagnetic coil is within a second frequency range, and perform a second function different from charging, e.g. tag communication, during a time when the resonance frequency of the electromagnetic coil is within a third frequency range.

For the purpose of the present disclosure, the terms pose and pose determination are intended to refer to the determination of information about the position and/or the orientation of the electronic device relative to the other electronic device. The information about the position may include a direction and/or a distance between the electronic devices. For magnetic pose determination, an electronic device may be configured for measuring at least one of one or more magnetic field generated by an external electromagnetic coil of another electronic device and for measuring gradient information of said measured at least one magnetic field. In some embodiments, the electronic device may be configured to generate one or more magnetic fields using at least one electromagnetic coil to allow one or more other electronic devices to measure the generated magnetic field, e.g. to measure the strength and/or direction of the thus generated magnetic field and to base a corresponding magnetic pose determination on these measurements. The electronic device may further comprise a processing unit configured to compute a pose of the other electronic device based on the measured at least one magnetic field and based on the measured gradient information.

A processing unit comprised in the electronic device may be configured to determine a behaviour, such as a functional behaviour, of the electronic device. The electronic device may be configured to control its behaviour, such as functional behaviour, on the determined behaviour. The determination of a behaviour of the electronic device may be based on a status, i.e. current condition, of the electronic device or part thereof. For example, the determination of a behaviour may e.g. be based on the status of a circuit, such as of the coil circuit, adjustment circuit, or detune circuit, on the status of charging or charging rate. The determination of a behaviour of the electronic device may be based on a magnetic pose determination, or on one or more signals received from a tag. The electronic device may be configured to control its behaviour based on one or more selected determined behaviours out a plurality of determined behaviours. A determined behaviour may comprise providing a user-perceptible effect such as a visible, audible, and/or haptic effect, and/or comprise performing one or more mechanical and/or electrical functions, and/or comprise communicating with an external device, such as a tag or another electronic device.

In some embodiments, the coil circuit is configured such that the first frequency range is higher than a resonance frequency range used for magnetic pose determination, and/or the coil circuit is configured such that the first frequency range is higher than a resonance frequency range used for communication with a tag.. In other embodiments, the coil circuit is configured such that the first frequency range is lower than a resonance frequency range used for magnetic pose determination, and/or the coil circuit is configured such that the first frequency range is lower than a resonance frequency range used for communication with a tag.

When charging, the resonance frequency of the electromagnetic coil may be substantially the same frequency as the wireless charging signal whereby the electronic device charges at a high efficiency when receiving the wireless charging signal. However, in a system comprising a wireless charger, i.e. a wireless power transmitter, and one or more wireless receivers, e.g. one or more electronic devices as described herein, and wherein the system is configured for charging the one or more receivers at a significant distance from the transmitter coil of the wireless charger, the power output of the transmitter coil may at some distances between the receiving coil and transmitter coil be so strong that a receiver has to detune its receiving coil, i.e. its electromagnetic coil, in order to protect electronic components within it, such as e.g. one or more processing units. Thus, in some embodiments, the coil circuit comprises a detune circuit configured to detune the resonance frequency of the electromagnetic coil during charging, i.e. at a time where the electromagnetic device is in a charging mode, where it is actively seeking to charge the energy storage device. The detune circuit also changes the resonance frequency of the electromagnetic coil, just as the adjustment circuit does, but the two have different purposes. The adjustment circuit alters the resonance frequency of an electromagnetic coil such that the coil can perform a function it is configured for using the coil at the new resonance frequency. In contrast, the detune circuit may be configured to shift the resonance frequency temporarily, possibly dynamically, thus changing the resonance frequency, which reduces, possibly entirely or almost entirely, the response of the electromagnetic coil to a wireless charging signal at the previous resonance frequency, i.e. at the resonance frequency of the coil prior to the shift. For example, an electronic device may be configured to detune the resonance frequency in order to lower the effective power received when charging. This is a way to protect the electronic device from excessive voltages. The detune circuit may be a switch circuit. The detune circuit and adjustment circuit may be implemented using partly or wholly the same circuit components. For example, one or more switches used in a circuit configured for wireless charging may be part of the detune circuit. Thus, the electronic device may be configured to initially adjust the resonance frequency to a frequency within the first frequency range in order to charge, but may need to detune away from the first frequency range, thus reducing the power received from the wireless charging signal, if the electronic device determines that the received power exceeds a predetermined threshold.

The electronic device may be configured to receive power from a wireless charging signal using radio frequencies that are designated for ISM applications, i.e. using an ISM band. In some embodiments, the first frequency range comprises, or is comprised in, the frequency range 15 - 50 MHz, such as 20 - 40 MHz, such as 25 - 30 MHz. In some embodiments, the first frequency range comprises, or is comprised in, the frequency range 100 kHz - 200 kHz. In some embodiments, the first frequency range comprises, or is comprised in, the frequency range 5 MHz - 8.5 MHz. In some embodiments, the first frequency range comprises, or is comprised in, the frequency range 12 MHz - 15 MHz. The first frequency range may comprise or be comprised in an ISM band. In some embodiments, the electronic device is configured to receive a wireless charging signal having a centre frequency in an ISM band comprising 140 kHz, and/or an ISM band comprising 6.78 MHz, and/or an ISM band comprising 13.56 MHz, and/or an ISM band comprising 27.12 MHz, where, for a given centre frequency, the wireless charging signal may be configured to comply with a regulated bandwidth of an ISM band comprising the given centre frequency. For example, the electronic device may be configured to receive power from, and charge from, a wireless charging signal having a centre frequency centred at or near 140 kHz, and/or centred at or near 6.78 MHz, and/or centred at or near 13.56 MHz, and/or centred at or near 27.12 MHz, where, for a given centre frequency, the wireless charging signal may be configured to comply with a regulated bandwidth of an ISM band comprising the given centre frequency. The electronic device may be configured to be able to receive power from, and charge from, a wireless charging signal comprising radio frequencies that are higher than those used in the 13.56 MHz RFID band, and the electronic device may further comprise an NFC/RFID tag reader.

In some embodiments, the resonance frequency range used for tag communication comprises at least part of an ISM band used for RFID, such as the band with the centre frequency 13.56 MHz. In some embodiments, the resonance frequency range used for magnetic field measurements comprises a frequency range below 13 MHz, such as below 12 MHz, such as below 10 MHz, such as below 9 MHz, such as below 7 MHz. In some embodiments, the resonance frequency range used for charging comprises the second harmonic of one or more frequencies in another of the used frequency ranges, such as of the frequency range used for tag communication. For example, the resonance frequency range used for tag communication may comprise the ISM band with the centre frequency 13.56 MHz, and the resonance frequency range used for charging comprises and/or is centred around the frequency 27.12 MHz. In a preferred embodiment, the first frequency range comprises, or is comprised in, the frequency range 15 - 50 MHz, such as 20 - 40 MHz, such as 25 - 30 MHz, and the resonance frequency range used for tag communication comprises, or is comprised in, at least part of an ISM band used for RFID, such as the band with the centre frequency 13.56 MHz, and the resonance frequency range used for magnetic field measurements comprises, or is comprised in, a frequency range below 13 MHz, such as below 12 MHz, such as below 10 MHz, such as below 9 MHz, such as below 7 MHz.

In some embodiments, the electronic device comprises two or more electromagnetic coils each defining a coil axis and the coil axes of the two or more electromagnetic coils being substantially linearly independent, e.g. orthogonal to one another. At least one electromagnetic coil in a multi-coil device will be configured to operate with two or more resonance frequencies as described herein. In some embodiments, at least one electromagnetic coil in the electronic device comprises a pair of electromagnetic coils, the pair comprising two series-connected coils. In some embodiments, the two series-connected coils are arranged coaxially to each other and axially spaced apart from each other.

The electronic device may be a wireless interactive toy. In some embodiments, the wireless interactive toy is or comprises a wireless interactive toy construction element. The greater functionality of the electronic device due to the multiple resonance frequencies of its electromagnetic coil means that the electronic device can enhance the play experience of a user, such as a child. At the same time, by performing multiple functions using the same electromagnetic coil(s) the form factor of the electronic device may not need to increase to accommodate additional coils for each functionality. Thus, the wireless interactive toy may be made to have great functionality and a relatively small form factor.

An electronic device may be used with other electronic devices in a system of electronic devices. Each electronic device may be configured to communicate with other electronic devices. Thus, an electronic device may comprise a wireless communications interface configured for wireless communication via a wireless communications network and the electronic device may be configured to wirelessly communicate with one or more other electronic devices via said wireless communications network. The wireless communication between electronic devices may be based on a broadcast system. Thus, an electronic device may be configured to send and receive broadcast messages.

An electronic device may be used in an electronic system with multiple electronic devices.

While one electronic device may be using one or more electromagnetic coils comprised in it for charging, another electronic device may be using one or more electromagnetic coils comprised in it for another function, such as magnetic pose determination or communicating with a tag. Wireless charging is generally a noisy activity, where a significant amount of power is output. Thus, in some advantageous embodiments, the first frequency range used for charging may be higher than the resonance frequency range(s) used for other functions so as to limit noise from charging signals and harmonics of those signals when the electromagnetic coil is used for other functions. Magnetic pose determination may be particularly noise sensitive. Therefore, advantageously, the resonance frequency range used for magnetic measurements may be lower in frequency than the resonance frequency ranges used for wireless charging and/or for tag communication. The resonance frequency range used for magnetic measurements may be the lowest of the used resonance frequency ranges.

Generally, it is preferable that the resonance frequency ranges used for some functions do not overlap. Thus, in some embodiments, each of the resonance frequency ranges used do not overlap with any of the other resonance frequency ranges used. This provides a frequency separation of the resonance frequency ranges. In some embodiments, the electronic device is configured to switch between the uses of each of the at least two frequency ranges according to a timing schedule. A timing schedule may be configured such that the use of one or more electromagnetic coils by electronic devices which are close enough to each other to cause interference is scheduled to minimize interference, for example such that only one device is actively using its one or more electromagnetic coils at a given time or such that simultaneous use of coils is at resonance frequencies which do not cause significant interference. For example, two electronic devices that are near each other may charge simultaneously, but if one electronic device wishes to communicate with a tag, the nearby electronic device may need to pause wireless charging. This may provide a time separation of the resonance frequency ranges.

### BRIEF DESCRIPTION OF THE DRAWINGS

Embodiments of the various aspects disclosed herein will be described in more detail in connection with the appended drawings, in which
FIG. 1 shows an example of an electronic device in the form of a wireless interactive toy construction element according to some embodiments;
FIG. 2 shows a schematic block diagram of an example of an electronic device formed as a wireless interactive toy construction element according to some embodiments;
FIG. 3 illustrates a schematic view of an electronic device according to some embodiments;
FIG. 4 schematically shows an exploded view of an example of an electronic device in the form of a wireless interactive toy construction element;
FIG. 5 shows a schematic block diagram of an example of a wireless power transmitter and an electronic device in the form of a toy construction element;
FIGS. 6A and 6B shows a wireless interactive toy construction element and a tag element according to some embodiments; and
FIG. 7 illustrates two wireless interactive toy construction elements according to some embodiments.

### DETAILED DESCRIPTION

Various aspects and embodiments of an interactive toy system comprising a plurality of interactive wireless toys will now be described with reference to toy construction elements in the form of bricks. In this particular and corresponding embodiments, the electronic devices are each formed as a respective wireless interactive toy construction element which each has a housing that is generally shaped as an orthogonal polyhedron with flat side faces and having coupling members extending from its upper surface and a cavity extending into its bottom surfaces. However other shapes and sizes of wireless interactive toy construction elements may be used, e.g. box-shaped or tile-shaped toy construction elements of different dimensions and with different numbers of coupling members. Moreover, while the brick-shape has proven to be particularly useful, the various aspects disclosed herein may be applied to other forms of electronic devices, including other forms of toy construction elements for use in play applications educational applications, and/or the like.

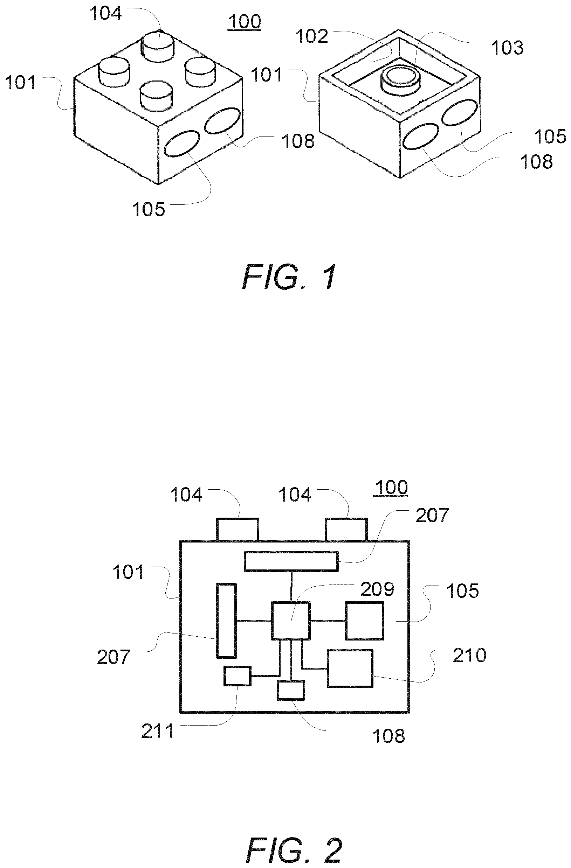

FIG. 1 shows an example of an electronic device in the form of a wireless interactive toy construction element, generally designated 100. On the left-hand side of FIG. 1 the wireless interactive toy construction element is shown with its top surface visible and, on the right-hand side, the wireless interactive toy construction element is shown with its bottom side visible. In particular, the wireless interactive toy construction element comprises a generally box-shaped housing 101 with coupling pegs 104 extending from its top surface and with a cavity extending into the element from the bottom. The cavity is defined by side walls 102 and by a central, downwardly extending tube 103. The coupling pegs of another toy construction element can be received in the cavity in a frictional engagement, e.g. as disclosed in US 3 005 282. The construction elements shown in the remaining figures have this known type of coupling members in the form of cooperating pegs and cavities. However, other types of coupling members may also be used in addition to, or instead of, the pegs and cavities. The coupling pegs are arranged across the top surface in a square planar grid, i.e. defining orthogonal directions along which sequences of coupling pegs are arranged. The distance between neighbouring coupling pegs is uniform and equal in both directions. This or similar arrangements of coupling members at coupling locations defining a regular planar grid allow the toy construction elements to be inter-connected in a discrete number of positions and orientations relative to each other, in particular at right angles with respect to each other. In an assembled toy construction model, the coupling members of multiple toy construction elements may thus be located on grid points of a three-dimensional grid defined relative to the toy construction model.

In some embodiments, the housing 101 of the wireless interactive toy construction element is made from plastics material, e.g. thermoplastic polymers, or from another suitable material. The housing may e.g. be made by an injection moulding process or by another suitable manufacturing process.

The wireless interactive toy construction element 100 may include a function device 105 accommodated within the housing 101 of the wireless interactive toy construction element. Generally, a function device may be any suitable device for performing a function, such as a function that provides a user-perceptible effect, such as a visible and/or audible effect. Examples of function devices may include any suitable mechanical and/or electrical device, arrangement, and/or circuitry adapted to perform one or more mechanical and/or electrical functions.

Examples of a mechanical function include driving a rotatable output shaft, winding-up a string or a chain which enables pulling an object closer to a toy module, moving a hinged part of the wireless interactive toy construction element, etc. The mechanical function may thus enable opening or closing a door, ejecting an object, rotating a turntable, moving a linear actuator, etc. Such mechanical motions can be driven by an electric motor.

Examples of an electrical function include emitting constant or blinking light, activating several lamps in a predetermined sequence, emitting audible sound such as beep, alarm, bell, siren, voice message, music, synthetic sound, natural or imitated sound simulating and/or stimulating play activities, playback of a sound, and/or other audio content, etc.

Accordingly, the function device may be selected from a motor, a light source (e.g. one or more LEDs), a sound source (e.g. a loudspeaker). The function wireless toy construction element may include more than one function device. In some embodiments the system includes different types of wireless interactive toy construction elements comprising, respectively, different types of function devices.

The wireless interactive toy construction element 100 includes a sensor system 108 comprising one or more sensors accommodated within the housing 101 of the wireless interactive toy construction element. The sensor system 108 may include one or more sensors, e.g. including the magnetic pose sensor described herein and/or one or more other sensors, e.g. a linear or rotary encoder, a light detector, and a sound detector (e.g. a microphone), an accelerometer, and/or the like.

FIG. 2 shows a schematic block diagram of an example of an electronic device formed as a wireless interactive toy construction element, generally designated 100, e.g. of the wireless interactive toy construction element shown in FIG. 1.

The wireless interactive toy construction element 100 comprises a housing 101 defining a top face which is provided with coupling members 104, all as described above with reference to FIG.1. The wireless interactive toy construction element 100 further comprises one or more electromagnetic coils 207 and a control unit 209 which may comprise one or more processing units, all accommodated within the housing 101. The wireless interactive toy construction element may further comprise, also accommodated within the housing 101, one or more additional sensors 108 and/or one or more function devices 105, e.g. as described in connection with the sensor system and function device of the embodiment of FIG. 1 above. The wireless interactive toy construction element 100 further comprises energy storage device 210, such as a rechargeable battery or a large capacitor, and a wireless communications interface 211, also accommodated within the housing 101.

Each electromagnetic coil 207 defines a coil axis around which the electromagnetic coil extends. In this example, the electromagnetic coils 207 are arranged such that one coil is arranged with its coil axis extending out of the top face of the housing while another other coil is arranged with its coil axis extending out of one of the side faces of the housing. A third electromagnetic coil (not explicitly shown in FIG. 2) may be arranged with its coil axis extending out of another side face of the housing, e.g. such that the axes of all three coils are oriented orthogonal to each other or at least linearly independent from each other. It will be appreciated, however, that other arrangements of coils are possible.

The wireless interactive toy is configured to perform multiple functions with its electromagnetic coils, and may be configured to do so at a separate resonance frequency for each function. At least one of the electromagnetic coils in a multi-coil device is configured to operate with two or more resonance frequencies and to perform different functions at each of the two or more resonance frequencies. Not all electromagnetic coils in a multi-coil device may be used for all functions, however. For example, a single electromagnetic coil may be used for wireless charging plus tag communication and/or magnetic pose determination, whereas the one or more other electromagnetic coils may be used only for tag communication and/or magnetic pose determination. The wireless interactive toy construction element is configured to receive electrical energy via one or more of the electromagnetic coils 207 for charging the energy storage device210 which in turn powers the control unit 209, the function device 105 and the wireless communications interface 211. Further, the wireless interactive toy is configured to use at least one of the coils used for charging for performing of one or more additional functions, e.g. to detect, identify and/or capture data from a wireless tag or for pose determination of another wireless interactive toy construction element.

As an additional function utilising one or more of the electromagnetic coils 207, the wireless interactive toy construction element may be operable to detect the pose of the wireless interactive toy construction element 100 relative to another wireless interactive toy construction element. To this end, the wireless interactive toy construction element 100 may be configured to use the electromagnetic coils 207 to measure the strength (including a relative phase and/or a direction) of one or more magnetic fields generated by corresponding coils of another wireless interactive toy construction element of the system. In this manner, based on measurements by the electromagnetic coils 207, the wireless interactive toy construction element may detect its own relative pose relative to another wireless interactive toy construction element. Moreover, by monitoring the pose over time, the wireless interactive toy construction element may detect whether the wireless interactive toy construction elements move or are stationary relative to each other. In this manner, the wireless interactive toy construction element may for example determine which other wireless interactive toy construction elements are mutually interconnected within a coherent toy construction model. The wireless interactive toy construction element may further be configured to energize one or more electromagnetic coils comprised in it to allow one or more other wireless interactive toy construction elements to measure the thus generated one or more magnetic fields and to base a corresponding pose determination on these measurements.

The one or more function devices 105 may include a light source, e.g. an LED, a loudspeaker, a motor, and/or another function device operable to perform a user-perceivable function.

The one or more sensors 108 may include a light sensor, a sound sensor, a rotational encoder, an accelerometer, a gyro, and/or any other suitable sensor, e.g. as described in connection with FIG. 1.

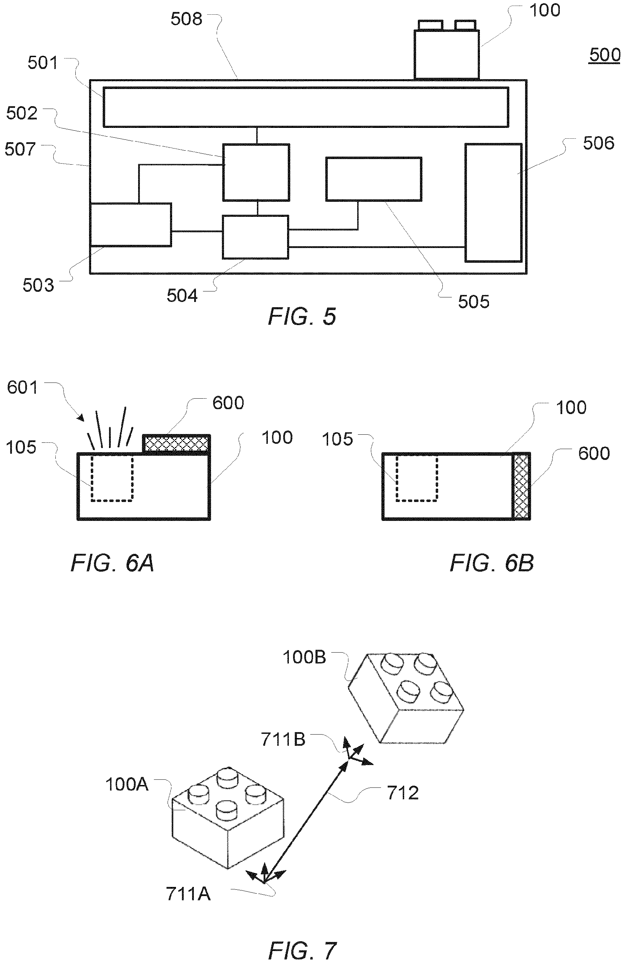

The wireless communications interface 211 may comprise a radio-frequency transceiver and an associated antenna. In some embodiments, the wireless communications interface may comprise a Bluetooth chip or circuit or another form of radio-frequency transceiver adapted for communication via a wireless communications network, e.g. using known low-power, short-range wireless networking technology, such as Bluetooth/Bluetooth Low Energy, ZigBee, Z-Wave, or a similar wireless technology for low-power personal area data networking in compliance with a standardized protocol. The wireless communications interface 211 may be operable for two-way communication with other wireless interactive toy construction elements of the system. Accordingly, the wireless interactive toy construction element may be operable to communicate its identity and/or operational characteristics, calibration parameters, scheduling information, pose information and/or the like. A wireless interactive toy construction elements may further be operable to communicate with other wireless interactive toy construction elements via a wireless communications network, e.g. by broadcasting messages to all other wireless interactive toy construction elements of the system or otherwise. When the wireless interactive toy construction elements are operable to communicate with each other, they may share a timing schedule to coordinate, such as coordinate the use of one or more electromagnetic coils. Each wireless interactive toy construction element may further exchange information about their identity and/or the type of function device they include and/or about their respective operational states, calibration parameters, etc. A timing schedule is described further in connection with FIG. 7.

The control unit 209 may comprise one or more microcontrollers, one or more microprocessors, one or more ASICs, and/or one or more other suitable processing units, or combinations thereof. The processing unit 209 may be configured to control the functional behaviour of the wireless interactive toy construction element. The wireless interactive toy construction element may be provided, e.g. preprogrammed, with a default behaviour, e.g. with default executable instructions stored in a memory of the wireless interactive toy construction element and executable by a processing unit of the wireless interactive toy construction element. The default executable instructions may define a set of predetermined rules for reacting to external stimuli as sensed by the sensor system, in particular for reacting to detected poses relative to other wireless interactive toy construction elements or to detected changes in such poses. In some embodiments, the behaviour of the wireless interactive toy construction element may be programmed or configured by the user, e.g. by receiving program data and/or configuration parameters. To this end, the wireless interactive toy construction element may receive program and/or control data and/or configuration parameters from a computer or from another external electronic device, e.g. directly or via another toy module of the system. An external electronic device may e.g. be or comprise a desktop computer, a tablet computer, a smartphone, a laptop computer, or another programmable computing device. Alternatively or additionally, the wireless interactive toy construction element may capture program and/or control data and/or configuration parameters from a wireless tag, e.g. from an RFID tag, or from other data storage devices. For example, the wireless interactive toy construction element may be operable to read out such wireless tag or other data storage device in a contactless manner.

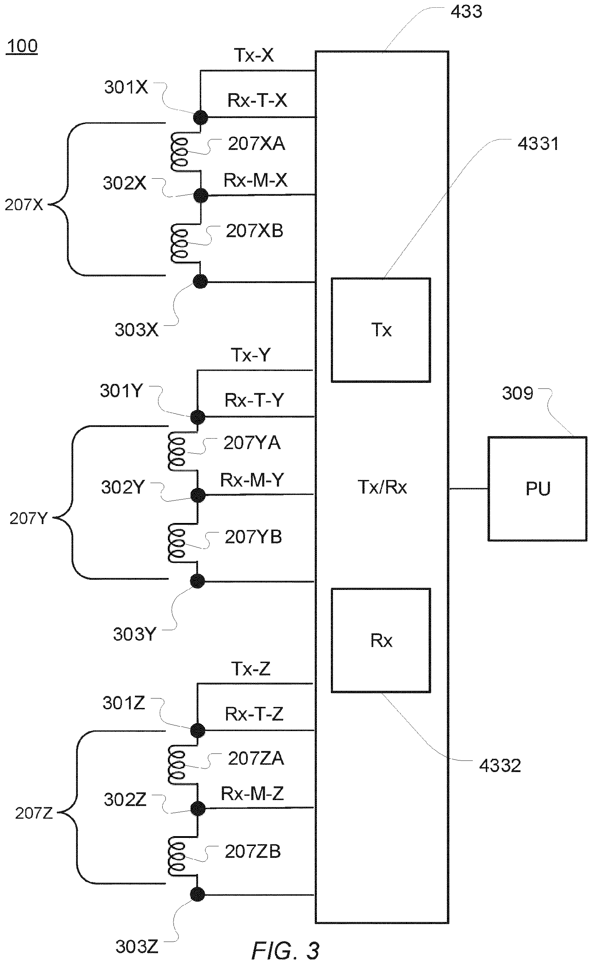

FIG. 3 illustrates a schematic view of an embodiment of an electronic device. The electronic device, generally designated 100 may be a wireless interactive toy construction element, e.g. as described in connection with any of FIGS. 1, 2 or 4. Alternatively, the electronic device may be a different type of electronic device.

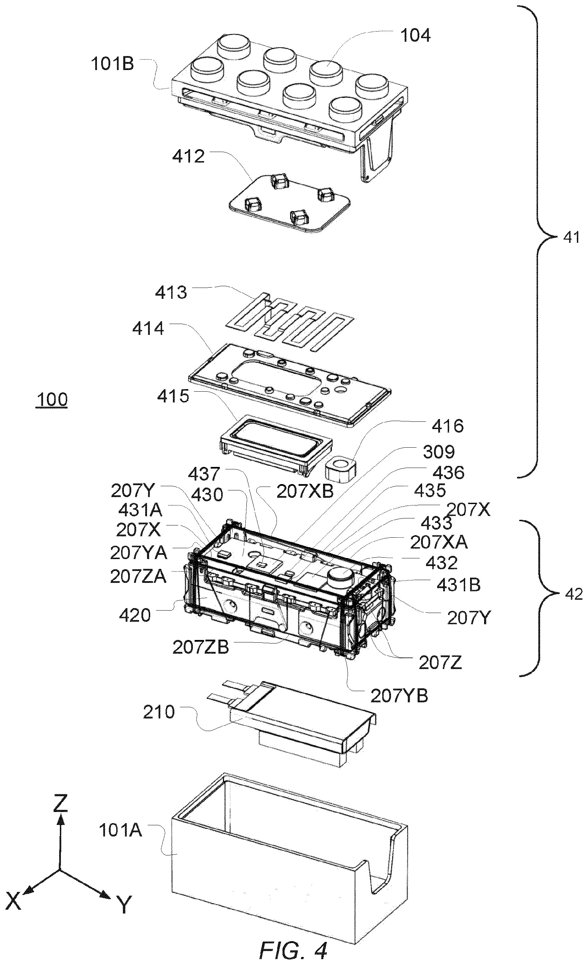

The electronic device 100 comprises one or more electromagnetic coils for measuring at least one magnetic field generated by an electromagnetic coil of another electronic device. In the example of FIG. 3, the electronic device comprises three pairs 207X, 207Y, and 207Z of electromagnetic coils, each comprising two series-connected coils. In particular, one pair of coils 207X comprises coils 207XA and 207XB, while another pair of coils 207Y comprises coils 207YA and 207YB, and a third pair of coils 207Z comprises coils 207ZA and 207ZB. The electromagnetic coils 207X, 207Y and 207Z may be arranged as three pairs of respective coils, and in such a way that the coils of each pair are arranged coaxially with each other and orthogonal to the coils of the other pairs, see FIG. 4. Each of the three electromagnetic coils 207X, 207Y and 207Z defines a coil axis around which the electromagnetic coil extends.

The electronic device 100 further comprises a processing unit 309, for example a processing unit comprised in the control unit 209. The processing unit 309 may be configured for various tasks such as regulation of the resonance frequency of one or more of the one or more electromagnetic coils 207X, 207Y and 207Z, regulation of wireless charging, see also FIG. 5, computing a pose of the electronic device relative to said other electronic device, see also FIG. 7, determination of a behaviour based on a determined relative position and/or relative orientation of a tag and/or on configuration data provided by the tag, and/or control of behaviour based on the determined behaviour, see also FIGS. 6A and 6B .

Each of the pairs of electromagnetic coils 207X, 207Y and 207Z has a resonance frequency which is primarily characterised by the coils themselves and their adjacent circuitry. Thus, by changing one or more properties of the adjacent circuitry, the resonance frequency of an electromagnetic coil can be altered. To this end, each of the pairs of electromagnetic coils 207X, 207Y and 207Z is coupled to an adjustment circuitry (not shown) which is configured to adjust the resonance frequency of the coupled electromagnetic coil pair. The adjustment circuitry may be implemented in hardware, e.g. as a switch circuit.

The electronic device 100 is configured to use at least one electromagnetic coil, possibly comprising a pair of series-connected coils, for wireless charging and to use the same electromagnetic coil(s) for other functions, where at least one of the other functions is performed with the electromagnetic coil(s) having a resonance frequency separate from a resonance frequency used for wireless charging by the electronic device. In some embodiments, where the electronic device comprises two or more electromagnetic coils, the electronic device may be configured to use a single electromagnetic coil for wireless charging, and further configured to use the same coil and additional coils for performing additional functions, while in other embodiments, the electronic device comprises two or more electromagnetic coils, the electronic device is configured to use multiple coils, but possibly not all coils, for wireless charging as well as for performing additional functions.

An additional function may be pose determination of other electronic devices, which may be best done using a different resonance frequency of the electromagnetic coils than that used for wireless charging. Each of the pairs of electromagnetic coils may configured for measuring gradient information of said measured magnetic field and the processing unit is configured to compute the pose based on the measured magnetic field and based on the measured gradient information. To this end, each of the pairs of electromagnetic coils defines two measurement nodes at respective locations along the series-connected pair of coils. In FIG. 3, one of the measurement nodes of each coil pair is designated 301X, 301Y and 301Z, respectively, while the other measurement node of each coil pair is designated 302X, 302Y and 302Z, respectively. In particular, measurement nodes 301X, 301Y and 301Z are arranged at one end of the corresponding coil pair. Each coil pair further defines an additional measurement node 302X, 302Y, 302Z, respectively, at the centre between the two coils of the corresponding pair. The electronic device 100 comprises a magnetic field measurement circuit 4332 configured to measure electric signals at respective ones of the measurement nodes of each of the coil pairs, in particular between each of the measurement nodes of each coil pair and a reference node and/or ground. To this end, in the example of FIG. 3, the nodes 503X, 503Y, and 503Z may be connected to ground, e.g. via suitable capacitors or otherwise The electronic device 100 comprises a coil interface circuit 433 electrically coupled to the pairs of electromagnetic coils 207X, 207Y and 207Z and electrically coupled to the processing unit 309. The coil interface circuit 433 comprises the magnetic field measurement circuit 4332 and a magnetic field generation circuit 4331. While illustrated as separate blocks in FIG. 3, it will be appreciated that the coil interface circuit and the processing unit may partly or completely be integrated with each other. For example, a part of the magnetic field measurement circuit 4332 and/or of the magnetic field generation circuit 4331 may be implemented by the processing unit 309, or otherwise.

The magnetic field generation circuit 4331 may be configured to apply a transmission signal to the measurement nodes 301X, 301Y, 301Z, respectively, of one or more of the electromagnetic coil pairs so as to cause the corresponding one or more coils to create a magnetic field that can be measured by another electronic device. In particular, the processing unit 309 may selectively operate the electronic device in transmission mode or in receiving mode. When operated in transmission mode, the electronic device may control the electromagnetic coils to generate one or more magnetic fields so as to allow other electronic devices to perform magnetic field measurements. When operated in receiving mode, the electronic device may measure electric signals at respective ones of the measurement nodes of each of the coil pairs so as to perform magnetic field measurements of at least one magnetic field generated by another electronic device. The electronic device may be configured to operate in a transmission mode and a receiving mode simultaneously.

In particular, when operated in transmission mode, the electronic device may sequentially activate its electromagnetic coils one pair at a time so as to transmit magnetic fields along respective directions. Similarly, when operated in receiving mode, the electronic device may concurrently or sequentially probe its pairs of electromagnetic coils so as to measure magnetic field components along respective directions.

Additionally, or alternatively, communication with a tag may further comprise a magnetic position and/or orientation determination which may e.g. be similar to the magnetic pose determination performed to compute the pose of another electronic device, but where the end result is a computation of the magnetic position and/or orientation of a tag element. Thus, this tag positioning determination is made with the one or more electromagnetic coils having a resonance frequency used for tag communication. The method used for tag positioning determination may thus be similar to the method outlined above, but comprising the electromagnetic coils being configured for measuring gradient information of a magnetic signal transmitted by a tag and the processing unit may be configured to compute the position and/or orientation of the tag based on the measured tag magnetic signal and based on the measured gradient information. Additionally, or alternatively, the electronic device may be configured for using a different method for determining tag position and/or orientation relative to the electronic device, wherein the in-built tag reader attempts to read a tag using a pair of receivers on a common pair of coil segments. This attempted reading using a pair of receivers may be repeated in a sequence of attempts, for example a sequence of three attempts making one attempt per X, Y, and Z coil axis direction. For each attempt the received signal strength and relative phase is measured by the two receivers on the two segments of the coil at the same time. These signal measurements may then be used to make an assessment of the nearest coil segment to the tag and the local range of the tag from that segment. Thus, where each coil segment is arranged substantially parallel to a face of the electronic device as shown in FIG. 4, the determination of the relative tag position and/or orientation may provide an assessment of the relative tag position and/or orientation to a face of the electronic device.

FIG. 4 shows an exploded view of an example of an electronic device in the form of a wireless interactive toy construction element, generally designated 100. The wireless interactive toy construction element 100 is similar to the embodiments of FIGS. 1 and 2, in that it comprises a housing, a control unit and one or more electromagnetic coils, all accommodated within the housing. As will be described below, the wireless interactive toy construction element 100 further comprises additional sensors and function devices, an energy storage device 210, e.g. a rechargeable battery, and a wireless communications interface 211, all as described in connection with one or more of the previous embodiments.

In the example of FIG. 4 the housing of the wireless interactive toy construction element 100 comprises an upwardly open bottom housing member 101A and a lid member 101B. The lid member 101B is configured to be connected to the bottom housing member 101A and, when connected, to close the opening of the bottom housing member, such that the bottom housing member and the lid member together form a housing accommodating the remaining components of the wireless interactive toy construction element. The lid member may be fastened to the bottom housing member in any suitable manner, e.g. by a snap fit connection, by welding, gluing or otherwise.

In some embodiments, the bottom housing member 101A and the lid member 101B are made from plastics material, e.g. thermoplastic polymers, or from another suitable material. The housing may e.g. be made by an injection moulding process or by another suitable manufacturing process. In the present example, the lid member is made from a transparent material.

The housing is box-shaped as described in connection with FIG. 1. The top face of the lid member includes coupling pegs 104 and the bottom face of the bottom housing member comprises corresponding cavities (not shown in FIG. 4), also as described in connection with FIG. 1.

The wireless interactive toy construction element 100 includes an energy storage device 210 accommodated in the bottom housing member 101A.

The wireless interactive toy construction element 100 includes a support frame 420, a printed circuit board (PCB) 430, and three pairs of electromagnetic coils 207X, 207Y and 207Z, respectively. The PCB 430 is attached to the support frame 420 and the coils are wound around the frame 420 such that the support frame, the coils and the PCB form a core assembly 42 accommodated inside the bottom housing member 101A.

The wireless interactive toy construction element 100 further comprises an antenna 413 and a loudspeaker 415, both mounted to the lid member 101B so as to form a top assembly 41. The top assembly 41 further comprises a coloured insert 412 sandwiched between the lid member 101B and the antenna 413. The top assembly 41 further comprises an opaque insert 414 sandwiched between the antenna 413 and the loudspeaker 415. The inserts 412 and 414 provide vents to facilitate highfrequency sound from the loudspeaker to pass, while obscuring the antenna and the other electronics components from view through the transparent lid member 101B. The PCB 430 is electrically connected to the antenna 413, the loudspeaker 415, the energy storage device 210, and to the coils of the coil pairs 207X, 207Y and 207Z. The PCB 430 further comprises a number of electronic components. In particular, the PCB comprises a processing unit 309, LEDs 431A and 431B, a microphone 432, a coil interface circuit 433, a memory 435, an accelerometer 436, and a wireless communications circuit 437. The top assembly further comprises an acoustic seal 416 positioned on top of the microphone 432.

The processing unit 309 may be implemented as a single processing unit or as a combination of multiple components, e.g. as an ASIC and a microprocessor, or otherwise. The processing unit 309 is coupled to the coils of the coil pairs 207X, 207Y and 207Z via the coil interface circuit 433. The coil interface circuit 433 may be implemented as a single unit or as multiple components. At least part of the coil interface circuit may be implemented by an ASIC, e.g. an ASIC that also implements a part of the processing unit 209. The processing unit 309 is further coupled to the remaining electronic components and implements suitable drivers and/or other control functionality for operating the respective electronic components. The wireless communications circuit 437 is coupled to the antenna 413 and to the processing unit 309 for implementing a suitable wireless communications protocol, such as based on Bluetooth Low Energy (BLE) or otherwise. The communications circuit 437, or at least a part thereof, may be integrated with the processing unit 309 as schematically illustrated in FIG. 4.

The LEDs 431A and 431B are arranged at respective opposite ends of the PCB such that the light from the LEDs is visible through the transparent lid member 101B.

As described in more detail in connection with FIG. 3, the electromagnetic coils are arranged as three pairs 207X, 207Y and 207Z of respective coils, and in such a way that the coils of each pair are arranged coaxially with each other and orthogonal to the coils of the other pairs. In particular, coil pair 207X comprises coils 207XA and 207XB, while coil pair 207Y comprises coils 207YA and 207YB, and coil pair 207Z comprises coils 207ZA and 207ZB. The coils of each coil pair are arranged spaced apart from each other, proximal to respective opposite sides of the box-shaped housing. The coils of each coil pair are electrically connected in series with each other, in particular such that they are cumulatively coupled. Each of the coils of the three electromagnetic coil pairs 207X, 207Y and 207Z defines a coil axis around which the coil extends, the coil axes being substantially normal to a side of the housing and each electromagnetic coil being referenced as X, Y, or Z depending on the direction of its coil axis according to the axis directions indicated in the lower left of FIG. 4.

FIG. 5 shows a schematic block diagram of a wireless power transmitter 500, also referred to as a wireless charger or wireless charging device, and an electronic device 100 in the form of a toy construction element according to some embodiments. The wireless power transmitter and one or more electronic devices may be comprised in a wireless power transfer system, where the one or more electronic devices are configured to harvest power output by the wireless power transmitter.

The wireless power transmitter comprises a transmitter coil 501 which is connected electrically to inductive charging circuitry 502, a power adapter 503 for connecting the wireless power transmitter to a power grid or other power supply, a transmitter control unit 504, a transmitter communication unit 505, and a user interface 506. The user interface may comprise buttons with which a user can interact with the wireless power transmitter, and/or it may comprise visible and/or tactile elements by which the wireless power transmitter can relay information to a user. The wireless power transmitter is configured to transmit a wireless power transfer signal, also referred to as a wireless charging signal, using a magnetic charging field configured for transmission of power. The wireless power transfer signal can be utilised by a suitably configured wireless power receiver such as the electronic device, for example the wireless interactive toy construction element shown in FIGS. 1-4.

The wireless power transmitter 500 may comprise an encasing 507, i.e. a housing, configured for facilitating charging of one or more electronic devices by placement of the one or more electronic devices on or near a charging surface 508 of the wireless power transmitter. The charging surface 508 may comprise one or more substantially horizontal surfaces to allow one or more objects, such as an electronic device, placed on it to be supported at rest by the wireless power transmitter, when the transmitter itself is positioned substantially horizontally. The charging surface may be a surface of the transmitter encasing 507 which is closest to the transmitter coil. The charging surface 508 may comprise a visible and/or tactile marking. The visible and/or tactile marking may be configured to aid a user in placement of electronic devices on or near the charging surface. The wireless power transmitter may be configured to produce a charging field that is powerful enough and which extends far enough away from the charging surface 508 that an electronic device is able to harvest energy from it even while at a distance from the charging surface 508. For example, the wireless power transmitter and the electronic device may be configured such that the electronic device is able to harvest energy when an electromagnetic coil used for charging is at a distance from the transmitter coil of the wireless power transmitter, e.g. such as at a distance from the transmitter coil of more than 1 cm, such as more than 2 cm, such as more than 3 cm.

In some cases, the wireless power transmitter 500 is configured for charging of a single electronic device, while in other embodiments, the wireless power transmitter 500 is configured to allow charging of multiple electronic devices simultaneously. The wireless power transmitter may be configured to support charging of electronic devices having one or more of a plurality of supported electromagnetic coil sizes, i.e. receiver coil sizes. The wireless power transmitter may be configured to support charging of an electronic device that comprises more than one receiver coil, where each receiver coil may be a different size and/or shape, and/or to support charging of various electronic devices that each comprise a coil that may be a different size and/or shape to that of the other electronic devices.

The transmitter control unit 504 may comprise one or more microcontrollers, one or more microprocessors, one or more ASICs, and/or one or more other suitable processing units, or combinations thereof and be configured to control the functional behaviour of the wireless interactive toy construction element. The transmitter control unit 504 may be configured to handle numerous control functions related to the wireless power transmitter. For example, the transmitter control unit 504 may control the functioning of the transmitter coil 508, the transmitter communications unit 505, etc. At least some functions of the transmitter control unit 504 may be implemented in hardware.

FIGS. 6A and 6B each show an example of a wireless interactive toy construction element 100 with a tag element 600, where the tag element is also a toy construction element. The wireless interactive toy construction element 100 may be a wireless interactive toy construction element as shown in FIGS. 1 and 2. The exemplary tag elements 100 shown in FIGS. 6A and 6B are shaped as flat cuboids, but tag elements may have other shapes. The wireless interactive toy construction element 100 and the tag element 600 may each have coupling members (not shown), such as cooperating pegs and cavities, configured for inter-connection of toy construction elements with each other. The wireless interactive toy construction element 100 and/or the tag element 600 may be the same in fig. 6A and 6B.

The wireless interactive toy construction element 100 may be configured to communicate with the tag element using its electromagnetic coil. When communicating with a tag element, the wireless interactive toy construction element adjusts the resonance frequency of its electromagnetic coil such to a resonance frequency suitable for tag communication and a frequency different from a frequency in the first frequency range. As part of the communication, the wireless interactive toy construction element may be configured to receive configuration data provided by the tag element. The wireless interactive toy construction element may be configured to determine a behaviour based at least in part on received configuration data from a tag element that is close enough to the wireless interactive toy construction element to be read by it. Further, the wireless interactive toy construction element may be configured to control its behaviour based on the determined behaviour.

Additionally, the wireless interactive toy construction element may be configured to determine a behaviour based at least in part on the relative position and/or orientation of a tag element. The relative position and/or orientation of a tag element may be determined by analysis of a signal transmitted by the tag element. The wireless interactive toy construction element may comprise any type of tag distance and/or tag orientation measuring system, such as an RFID tag distance and/or RFID tag orientation measuring system. The relative position and/orientation of a tag element may be provided as an absolute position of the tag element in an external reference coordinate system, a so-called fixed or invariant coordinate system.

In each of FIGS. 6A and 6B, the flat tag element 600 is placed in a relative position and/or orientation with respect to each of the wireless interactive toy construction elements 100, where the wireless interactive toy construction elements 100 may be the same element. In FIG. 6A the tag element 600 is on what may be considered a top side of the wireless interactive toy construction element. The placement of the tag element 600 causes the function device 105 of the wireless interactive toy construction element to activate and generate a user-perceptible output 601. The output 601 may be e.g. a discernible movement, an audible sound signal, a visible light signal, a tactile experience, etc. In FIG. 6B the tag element 600 has been placed on what may be considered a side of the wireless interactive toy construction element and this relative position and/or orientation of the tag element with respect to the wireless interactive toy construction element does not generate the user-perceptible output as the one indicated in fig. 6A. However, unseen by the user, the wireless interactive toy construction element 100 may have detected the position and/or orientation of the tag element 600 relative to itself, determined a behaviour based on the detected relative position and/or relative orientation of the tag element and on configuration data provided by the tag element, and controlled its behaviour based on the determined behaviour.

FIG. 7 illustrates two wireless interactive toy construction elements 100A and 100B, respectively, e.g. wireless interactive toy construction elements of the type shown in FIGS. 1 and 2. The wireless interactive toy construction elements 100A and 100B may include the same type of function device or different types of function devices. The wireless interactive toy construction element 100A is operable to detect the pose of the wireless interactive toy construction element 100A relative to an internal coordinate system of the wireless interactive toy construction element 100B. The relative position may be defined as a 3D displacement 712 of an internal coordinate system 711A of the wireless interactive toy construction element 100A relative to an internal coordinate system 711B of the wireless interactive toy construction element 100B. The relative orientation may be defined in different ways, e.g. by a quaternion or by three angles defining the rotation of the internal coordinate system 711A of the wireless interactive toy construction element 100A relative to the internal coordinate system 711B of the wireless interactive toy construction element 100B , or otherwise. The angles may thus describe a pitch, yaw, and roll, respectively, of the element 100A relative to the element 100B. Similarly, wireless interactive toy construction element 100B may detect its own corresponding pose to element 100A.

One or both of the wireless interactive toy construction elements 100A and 100B may be operable, at predetermined times, to activate their one or more electromagnetic coils to emit one or more magnetic fields. When wireless interactive toy construction element 100B emits a magnetic field, wireless interactive toy construction element 100A may use its respective electromagnetic coils to receive and sense the emitted magnetic field and to perform magnetic field measurements. Based on the measured magnetic fields, the receiving wireless interactive toy construction element 100A may compute its own pose relative to the currently transmitting wireless inter-active toy construction element 100B as described herein. While FIG. 7 only illustrates two wireless interactive toy construction elements, it will be appreciated that a system may include more than two wireless interactive toy construction elements. When one of the wireless interactive toy construction elements emits a magnetic field, the other wireless interactive toy construction elements may use their respective electromagnetic coils to receive and sense the emitted magnetic field and to perform respective magnetic field measurements and pose determinations. It will be appreciated that a three-dimensional positioning may require that each wireless interactive toy element includes three coils that are preferably arranged orthogonally relative to each other.

The wireless interactive toy construction elements 100A-B may further be operable to communicate with each other via a wireless communications network, e.g. by broadcasting messages to all other wireless interactive toy construction elements of the system or otherwise. When the wireless interactive toy construction elements are operable to communicate with each other, they may share a timing schedule which may define which wireless interactive toy construction elements are to perform which function using its one or more electromagnetic coils, for example, which wireless interactive toy construction element emit a magnetic field at what times.

The wireless interactive toy construction elements may broadcast information such as their determined poses via the wireless communications network to the remaining wireless interactive toy construction elements, including to the currently transmitting wireless interactive toy construction element. Other information that may be transmitted is: information received from a tag and/or one or more tag positioning determinations and/or status of energy storage device, status of wireless power transmitter, characteristic of wireless power transmitter, etc.

The role of the transmitting wireless toy construction element may selectively be assigned to respective ones of the wireless interactive toy construction elements, e.g. cyclically or according to another timing schedule, or otherwise. The timing schedule may be created by a selected one of the wireless interactive toy construction elements, also referred as the scheduler device. The scheduler device may broadcast the created timing schedule to the other wireless interactive toy construction elements or share the created schedule with the other wireless interactive toy construction elements in another manner. Accordingly, after a number of wireless interactive toy construction elements have generated respective magnetic fields, the wireless interactive toy construction elements are capable of obtaining distance and, optionally even directional and/or orientational pose information relative to some, if not all, of the other wireless interactive toy construction elements of the system.

The thus obtained pose information may be used by the wireless interactive toy construction elements in a variety of ways. In particular, the timing schedule may be based on the relative distance and orientation of wireless interactive toy construction elements by making a determination of which functions using one or more electromagnetic coils may be performed by which wireless interactive toy construction elements without creating significant interference for other wireless interactive toy construction elements and basing the timing schedule on that determination.

Further, based on their relative distance and orientation, the wireless interactive toy construction element 100A may determine whether it is physically connected to wireless interactive toy construction element 100B, e.g. as part of the same coherent toy construction model - or at least whether it is likely to be thus interconnected. Alternatively, or additionally, the wireless interactive toy construction element 100A may determine whether it is charging from the same wireless power transmitter as wireless interactive toy construction element 100B - or at least whether it is likely that they are on the same charger. Alternatively, or additionally, the wireless interactive toy construction element 100A may determine whether it should react to information obtained from a tag communication done by wireless interactive toy construction element 100B and shared with element 100A.

### LIST OF REFERENCES

- 100: a wireless interactive toy construction element
- 101: housing
- 102: side walls
- 103: tube
- 104: coupling members
- 105: function device
- 108: sensor system
- 207: electromagnetic coil
- 209: control unit
- 210: energy storage device
- 211: wireless communications interface
- 302X/Y/Z: measurement node of each coil pair
- 309: processing unit
- 41: top assembly
- 42: core assembly
- 412: coloured insert
- 413: antenna
- 414: opaque insert
- 415: loudspeaker
- 416: acoustic seal
- 420: support frame
- 430: PCB
- 431: LED
- 432: microphone
- 433: coil interface circuit
- 435: memory
- 436: accelerometer
- 437: wireless communications circuit
- 4331: magnetic field generation circuit
- 4332: magnetic field measurement circuit
- 500: wireless power transmitter
- 501: transmitter coil
- 502: inductive charging circuitry
- 503: power adapter
- 504: transmitter control unit
- 505: transmitter communications unit
- 506: user interface
- 507: transmitter encasing
- 508: charging surface
- 600: tag element
- 601: user-perceptible output
- 711: internal coordinate system
- 712: relative displacement

## Claims

1. **An electronic device** comprising:
- an energy storage device;
- a coil circuit comprising an electromagnetic coil, the coil circuit comprising an adjustment circuit for adjusting a resonance frequency of the electromagnetic coil, the adjustment circuit being configured to allow the electromagnetic coil to have a resonance frequency within one of at least two frequency ranges;
the electronic device being configured to:
- receive a wireless charging signal having a frequency within a first frequency range of the at least two frequency ranges, and
- use the received wireless charging signal to charge the energy storage device ,
wherein the coil circuit is configured such that the default resonance frequency of the electromagnetic coil is within the first frequency range.

2. The electronic device according to claim 1, wherein the electronic device is further configured to:
- determine a pose of the electronic device based on a signal received by the electromagnetic coil at a time where the coil has a resonance frequency within a resonance frequency range of the at least two resonance frequency ranges different from the first frequency range, and/or
- receive a signal from a tag and/or transmit a signal intended for a tag at a time where the coil has a resonance frequency within a resonance frequency range of the at least two resonance frequency ranges different from the first frequency range.

3. The electronic device according to any of claims 1 or 2, wherein the coil circuit is configured such that the first frequency range is higher than a resonance frequency range used for magnetic pose determination, and/or
wherein the coil circuit is configured such that the first frequency range is higher than a resonance frequency range used for communication with a tag.

4. The electronic device according to any of the previous claims, wherein the coil circuit comprises a detune circuit configured to detune the resonance frequency of the electromagnetic coil during charging.

5. The electronic device according to any of the previous claims, wherein the first frequency range comprises, or is comprised in, the frequency range 15 - 50 MHz, such as 20 - 40 MHz, such as 25 - 30 MHz, and/or
the resonance frequency range used for tag communication comprises, or is comprised in, at least part of an ISM band used for RFID, such as the band with the centre frequency 13.56 MHz, and/or
the resonance frequency range used for magnetic field measurements comprises, or is comprised in, a frequency range below 13 MHz, such as below 12 MHz, such as below 10 MHz, such as below 9 MHz, such as below 7 MHz.

6. The electronic device according to any of the previous claims, wherein electronic device is configured such that the first frequency range does not overlap with any other of the at least two frequency ranges, and/or
wherein the electronic device is configured such that the a frequency range used for pose determination does not overlap with a frequency range used for tag communication.

7. The electronic device according to any of the previous claims, wherein the electronic device is configured to switch between at least two of the at least two frequency ranges according to a timing schedule.

8. The electronic device according to any of the previous claims, wherein the electronic device comprises two or more electromagnetic coils each defining a coil axis and the coil axes of the two or more electromagnetic coils being substantially linearly independent.

9. The electronic device according to any one of the preceding claims, wherein at least one electromagnetic coil in the electronic device comprises a pair of electromagnetic coils, the pair comprising two series-connected coils, where, optionally, the two series-connected coils are arranged coaxially to each other and axially spaced apart from each other.

10. The electronic device according to any one of the preceding claims, wherein the electronic device is a wireless interactive toy.

11. The electronic device according to claim 10, wherein the wireless interactive toy is or comprises a wireless interactive toy construction element.

12. The electronic device according to any one of the preceding claims, wherein the electronic device comprises a wireless communications interface configured for wireless communication via a wireless communications network and wherein the electronic device is configured wirelessly communicate with one or more other electronic devices via said wireless communications network.

13. **A system of electronic devices** comprising two or more electronic devices according to any of claims 1 - 12, wherein each electronic device comprises a wireless communications interface configured for wireless communication via a wireless communications network and wherein each electronic device is configured to wirelessly communicate with one or more other electronic devices via said wireless communications network.

14. **A system comprising a wireless charger and at least one electronic device** according to any of claims 1 - 12, wherein the wireless charger comprises a transmitter coil and is configured to transmit the wireless charging signal having a frequency within a first frequency range.

15. The system according to claim 14, wherein the wireless charger and the at least one electronic device is configured such that the electronic device is able to harvest energy when the electromagnetic coil used for charging is at a distance from the transmitter coil, e.g. such as at a distance from the transmitter coil of more than 1 cm, such as more than 2 cm, such as more than 3 cm.
